# FASCICULE DE BREVET EUROPEEN

(11) **EP 4 533 319 B1**
(45) Date de publication et mention de la délivrance du brevet: **26.08.2026**
(21) Numéro de dépôt: 23731321.8
(22) Date de dépôt: 26.05.2023
(51) Int. Cl.: G06F 21/62

(54) **PROCÉDÉ, DISPOSITIF ET PROGRAMME D'ORDINATEUR D'AIDE À L'ACCÈS À UNE PRESTATION**
VERFAHREN, VORRICHTUNG UND COMPUTERPROGRAMM ZUR UNTERSTÜTZUNG DES ZUGRIFFS AUF EINEN DIENST
METHOD, DEVICE AND COMPUTER PROGRAM TO ASSIST WITH ACCESS TO A SERVICE

(30) Priorité: 03.06.2022 FR 2205357
(43) Date de publication de la demande: 09.04.2025
(73) Titulaire: La Francaise Des Jeux, 92100 Boulogne-Billancourt (FR)
(72) Inventeur: AMATE, Christophe, 13960 SAUSSET LES PINS (FR); SYLVESTRE, Fanny, 92140 CLAMART (FR); BOUQUET, Côme, 94200 IVRY SUR SEINE (FR)
(74) Mandataire: Casalonga
(86) Numéro de dépôt international: PCT/FR2023/050741
(87) Numéro de publication internationale: WO 2023/233093

(56) Documents cités:
- JP-A- 2010 079 394
- DE FUENTES J M ET AL: "Assessment of attribute-based credentials for privacy-preserving road traffic services in smart cities", PERSONAL AND UBIQUITOUS COMPUTING, SPRINGER VERLAG, LONDON, GB, vol. 21, no. 5, 25 July 2017 (2017-07-25), pages 869 - 891, XP036330906, ISSN: 1617-4909, [retrieved on 20170725], DOI: 10.1007/S00779-017-1057-6
- SEPPALA JONI ET AL: "Enhancing Image Coding for Machines with Compressed Feature Residuals", 2021 IEEE INTERNATIONAL SYMPOSIUM ON MULTIMEDIA (ISM), IEEE, 29 November 2021 (2021-11-29), pages 217 - 225, XP033999988, DOI: 10.1109/ISM52913.2021.00044

## Description

L'invention se rapporte au domaine de l'accès à des services, des produits ou des lieux, notamment d'accès à des services tels que des jeux, par exemple pour aider un utilisateur à accéder à un jeu en fonction de certaines de ses caractéristiques, notamment en fonction de son âge.

Dans de nombreuses situations, l'accès à des services, des produits ou des lieux est soumis à un ou plusieurs critères particuliers, par exemple un âge minimum de l'utilisateur souhaitant accéder à un service, un produit ou un lieu particulier. Ainsi, à titre d'illustration, lorsqu'un joueur souhaite faire un pari sportif, par exemple parier quelques euros ou dizaines d'euros sur un résultat d'un match de football, un détaillant peut, dans un point de vente, au moment d'enregistrer le pari, demander un justificatif d'identité s'il a un doute sur l'âge du joueur (les paris sont généralement réservés aux personnes majeures). Un tel contrôle présente cependant de nombreux inconvénients. En particulier, il prend du temps, ce qui peut conduire à un mécontentement des clients du détaillant, oblige les joueurs à révéler leur identité et peut, dans certaines situations, être vexatoire. Ces contraintes conduisent parfois à ce que des joueurs ou, plus généralement, des utilisateurs, qui pourraient accéder à un service, un produit ou un lieu y renoncent. Le document JP2010079394A fait partie de l'état de la technique pertinent.

Il existe donc un besoin pour simplifier l'accès à certaines caractéristiques d'un utilisateur, par un opérateur contrôlant l'accès à des services, des produits ou des lieux, afin de permettre une vérification simple, rapide, efficace et peu envahissante en termes d'accès à des données personnelles, pour décider de donner accès ou non au service, produit ou lieu demandé.

La présente invention vise notamment à résoudre ces problèmes.

### Exposé de l'invention

La présente invention est définie par les revendications indépendantes annexées. Les modes de réalisation préférés sont décrits dans les revendications dépendantes. A cet effet, l'invention propose un procédé, un dispositif et un programme d'ordinateur d'aide à l'accès à des services ou des produits.

Il est ainsi proposé un procédé pour ordinateur d'aide à l'accès à une prestation à l'aide d'un dispositif pourvu de moyens d'acquisition de données et de moyens de communication, ladite prestation n'étant accessible que sous au moins une condition, le procédé comprenant,
- obtention, par ledit dispositif, de données d'identification d'un utilisateur, à partir desdits moyens d'acquisition dudit dispositif et d'un document d'identification, lesdites données d'identification comprenant au moins une photographie dudit utilisateur et une caractéristique dudit utilisateur,
- transmission, par ledit dispositif, desdites données d'identification obtenues à un système de validation,
- en réponse à ladite transmission desdites données d'identification, réception, par ledit dispositif, d'une donnée de validation confirmant la validité dudit document d'identification,
- en réponse à ladite réception d'une donnée de validation, création et mémorisation, par ledit dispositif, d'un certificat numérique, ledit certificat numérique comprenant au moins une photographie dudit utilisateur et ladite caractéristique obtenue,
ledit certificat numérique étant utilisé pour obtenir ladite caractéristique et ladite photographie, ladite photographie pouvant être comparée avec un visage réel pour valider ladite caractéristique, ladite prestation étant accédée en réponse à la validation de ladite caractéristique.

Le procédé selon l'invention permet ainsi d'aider un utilisateur à accéder à un service, un produit ou un lieu et/ou un opérateur à donner accès à un service, un produit ou un lieu, en facilitant le contrôle de certaines caractéristiques de l'utilisateur, par exemple son âge, de façon simple, rapide et sûre, et préservant son anonymat. De tels services, produits et lieux sont, par exemple, des jeux, notamment des paris sportifs, des boissons alcoolisées, des cigarettes, des discothèques, etc.

Selon des modes de réalisation particuliers, le procédé comprend en outre l'obtention, par ledit dispositif, d'une photographie actuelle dudit utilisateur, ladite photographie actuelle étant obtenue à partir desdits moyens d'acquisition dudit dispositif, ladite photographie dudit certificat numérique étant ladite photographie actuelle.

Toujours selon des modes de réalisation particuliers, le procédé comprend en outre une transmission, par ledit dispositif, de ladite photographie actuelle audit système de validation pour vérifier que ledit utilisateur est le titulaire dudit document d'identité.

Toujours selon des modes de réalisation particuliers, le procédé comprend en outre une étape de compression et/ou de codage, par ledit dispositif, de ladite photographie et de ladite caractéristique dudit certificat numérique.

Toujours selon des modes de réalisation particuliers, le procédé comprend en outre une étape de calcul, par ledit dispositif, d'une signature basée sur ladite photographie et/ou ladite caractéristique dudit certificat numérique, ladite signature étant ajoutée audit certificat numérique.

Toujours selon des modes de réalisation particuliers, le procédé comprend en outre
- obtention, par ledit dispositif, de données relatives à ladite prestation,
- codage, par ledit dispositif, desdites données obtenues relatives à ladite prestation et de données dudit certificat numérique dans un code d'accès à ladite prestation, et
- transmission, par ledit dispositif, dudit code d'accès à un terminal d'un opérateur, ledit terminal étant configuré pour décoder des données dudit code d'accès et afficher au moins ladite photographie dudit certificat numérique et une information obtenue à partir de ladite caractéristique dudit certificat numérique.

Toujours selon des modes de réalisation particuliers, le procédé comprend en outre la transmission dudit code d'accès comprend l'affichage dudit code d'accès sur ledit dispositif.

Toujours selon des modes de réalisation particuliers, le procédé comprend en outre
- réception, par ledit terminal, dudit code d'accès,
- obtention, dans ledit terminal, de ladite photographie dudit certificat numérique codé dans ledit code d'accès,
- affichage, par ledit terminal, de ladite photographie obtenue dudit certificat numérique codé dans ledit code d'accès et de ladite information obtenue à partir de ladite caractéristique dudit certificat numérique,
- en réponse à une validation, sur ledit terminal, d'un opérateur suite audit affichage de ladite photographie obtenue dudit certificat numérique codé dans ledit code d'accès et de ladite information obtenue à partir de ladite caractéristique dudit certificat numérique, fourniture d'un accès à ladite prestation audit utilisateur.

L'invention a également pour objet un dispositif configuré pour mettre en oeuvre le procédé décrit ci-dessus ou une partie de celui-ci. Les avantages procurés par ce dispositif sont similaires à ceux décrits précédemment au regard du procédé.

Un programme informatique, mettant en œuvre tout ou partie du procédé décrit ci-dessus, installé sur un équipement préexistant, est en lui-même avantageux, dès lors qu'il permet d'accéder et sélectionner facilement et rapidement un événement susceptible d'intéresser un utilisateur.

Ainsi, la présente invention vise également un programme informatique comportant des instructions pour la mise en œuvre du procédé précédemment décrit, en totalité ou en partie, lorsque ce programme est exécuté par un processeur.

Ce programme peut utiliser n'importe quel langage de programmation (par exemple, un langage objet ou autre) et être sous la forme d'un code source interprétable, d'un code partiellement compilé ou d'un code totalement compilé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoires et à un module d'interface entrées/sorties, pour exécuter tout ou partie du procédé décrit ci-dessus.

### Brève description des dessins

D'autres caractéristiques, détails et avantages de l'invention apparaîtront à la lecture de la description détaillée ci-après. Celle-ci est purement illustrative et doit être lue en regard des dessins annexés, dans lesquels :
la **Figure 1** illustre un exemple d'un environnement dans lequel l'invention peut être mise en œuvre selon des modes de réalisation particuliers ;
la **Figure 2** illustre un exemple d'étapes d'un procédé de création d'un certificat numérique pour aider ultérieurement un utilisateur à accéder à un service et/ou un fournisseur d'accès à donner accès à un service, selon des modes de réalisation particuliers de l'invention ;
la **Figure 3** illustre un exemple d'étapes d'un procédé d'utilisation d'un certificat numérique pour accéder à un jeu, selon des modes de réalisation particuliers de l'invention, mises en œuvre dans un dispositif d'un joueur ;
la **Figure 4** illustre un exemple d'étapes d'un procédé d'utilisation d'un certificat numérique pour donner accès à un jeu, par exemple un pari sportif, selon des modes de réalisation particuliers de l'invention, mises en œuvre dans un terminal d'un opérateur, par exemple un terminal d'un détaillant dans un point de vente ;
la **Figure 5** illustre un exemple d'un dispositif d'un joueur voulant enregistrer une participation à un jeu ;
la **Figure 6** illustre un exemple d'un écran d'un terminal d'un opérateur, par exemple un terminal d'un détaillant d'un point de vente, utilisé pour enregistrer une participation à un jeu ; et
la **Figure 7** illustre un exemple de dispositif pouvant être utilisé pour mettre en oeuvre, au moins partiellement, des modes de réalisation de l'invention, notamment des étapes décrites en référence aux figures 2 et 3.

### Description détaillée

Selon des modes de réalisation particuliers de l'invention, l'accès à un service, un produit ou un lieu est effectué en deux phases. Durant une première phase, un certificat numérique est créé par un utilisateur à l'aide d'un dispositif tel qu'un smartphone ou une tablette. Ce certificat numérique comprend par exemple une photographie de l'utilisateur ainsi qu'une caractéristique permettant l'accès au service, au produit ou au lieu, par exemple la date de naissance de l'utilisateur qui pourra être utilisée pour déterminer l'âge de l'utilisateur lorsque celui-ci voudra, dans une deuxième phase, accéder à un produit, un service ou un lieu. Le certificat numérique peut être créé à partir d'un document d'identité, par exemple une carte d'identité, qui est de préférence contrôlée dans un système (par exemple un serveur) d'un tiers de confiance et dont sont extraites des informations utilisées pour créer le certificat numérique. La photographie de l'utilisateur stockée dans le certificat numérique peut être obtenue à partir du dispositif utilisé pour créer le certificat numérique et utilisée pour contrôler l'utilisateur par comparaison avec une photographie du document d'identité. Le certificat numérique est de préférence signé pour réduire des risques de fraude. Il est stocké dans un dispositif de l'utilisateur, par exemple dans le dispositif utilisé pour créer le certificat numérique.

Lorsque l'utilisateur veut accéder à un service, un produit ou un lieu, il utilise son certificat numérique pour fournir des informations, par exemple sa photographie et sa date de naissance, à l'opérateur donnant accès au service, au produit ou au lieu. La photographie peut être affichée sur son dispositif pour permettre à l'opérateur donnant accès au service, au produit ou au lieu de vérifier que le certificat numérique est bien celui du porteur du dispositif (en comparant la photographie avec le visage de l'utilisateur) et calculer son âge (à partir de la date de naissance et de la date de jour). Alternativement ou de façon complémentaire, le certificat numérique peut également être transmis à un dispositif, par exemple un terminal, de l'opérateur donnant accès au service, au produit ou au lieu, qui peut alors en extraire les informations pour vérifier que l'utilisateur peut accéder au service ou au produit demandé. Alternativement, le certificat numérique peut être utilisé de façon transparente pour l'utilisateur, par exemple en l'ajoutant ou en ajoutant certains de ses éléments (e.g. la photographie, la date de naissance de l'utilisateur et la signature du certificat numérique) à des données de jeu, par exemple des données de paris sportifs. Les données de jeux comprenant le certificat numérique ou des éléments du certificat numérique peuvent être codées sous forme code de participation (ou code d'enregistrement ou, plus généralement, code d'accès), par exemple un QR code ou un code-barres, qui est présenté à l'opérateur donnant accès au service, au produit ou au lieu. Après avoir scanné le QR code ou le code-barres avec un dispositif de lecture relié à un terminal, la photographie et une indication de majorité peuvent être affichées sur le terminal pour permettre à l'opérateur donnant accès au service, au produit ou au lieu de valider l'accès au service, au produit ou au lieu, par exemple enregistrer un pari sportif.

Dans un souci de clarté et de concision, les exemples qui suivent visent essentiellement l'accès à des services, notamment des jeux tels que des paris sportifs. Cependant, ces exemples ne sont pas limitatifs et des étapes similaires à celles décrites peuvent être mises en oeuvre pour faciliter l'accès à tous types de prestations contrôlées, notamment l'accès à des produits ou des lieux.

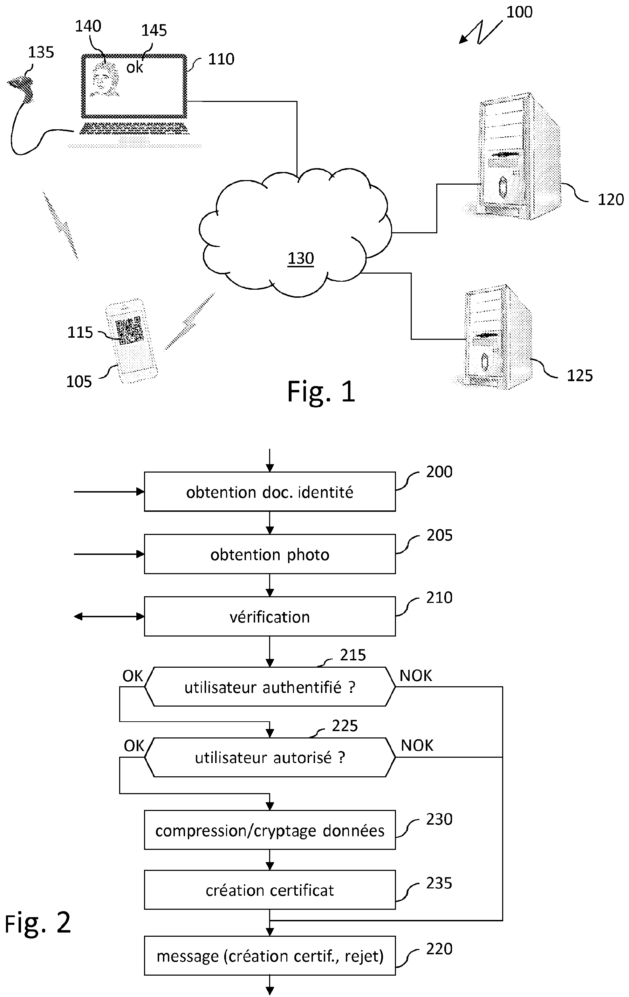

La **figure 1** illustre un exemple d'un environnement 100 dans lequel l'invention peut être mise en oeuvre selon des modes de réalisation particuliers. Comme représenté, un utilisateur tel qu'un joueur peut utiliser un dispositif 105 tel qu'un téléphone intelligent (smartphone) ou une tablette pour l'aider à accéder à un service ou un produit, par exemple participer à des paris sportifs. Ce service ou ce produit peut être proposé par un opérateur via un détaillant pourvu d'un terminal 110, par exemple un détaillant dans un point de vente. Le dispositif de l'utilisateur est avantageusement pourvu de moyens de capture de données (non représentés), par exemple un capteur photo ou vidéo, d'un écran pour afficher des données, par exemple des données codées sous forme de QR codes comme le QR code 115 ou de codes-barres, et de moyens de communication (non représentés) pour échanger des données avec un ou plusieurs serveurs distants, par exemple les serveurs 120 et 125, via un réseau de communication 130.

Le terminal 110 utilisé par le détaillant est, de préférence, pourvu de moyens d'acquisition de données 135, par exemple des moyens de lecture optique adaptés pour lire des QR codes ou des codes-barres, d'un écran pour afficher des données, notamment une photographie reçue du dispositif 105 et des données caractérisant l'utilisateur ou indicatives d'une caractéristique de l'utilisateur, par exemple une indication de majorité 145. Le terminal 110 peut en outre comprendre des moyens de communication (non représentés), par exemple pour enregistrer la participation de l'utilisateur à un jeu tel qu'un pari sportif.

Les moyens de communication du dispositif 105 et/ou du terminal 110 sont des moyens de communication filaires ou sans fil, par exemple des moyens de communication conformes aux standards WiFi, Bluetooth ou Ethernet (WiFi et Bluetooth sont des marques). De même, les serveurs 120 et 125 comprennent des moyens de communication. A nouveau, il peut s'agir, par exemple, de moyens de communication conformes aux standards WiFi, Bluetooth ou Ethernet. Les moyens de communication de ces dispositifs peuvent s'appuyer sur des protocoles de communication standard, par exemple le protocole TCP/IP (sigle de Transmission Control Protocol / Internet Protocol en terminologie anglo-saxonne).

A titre d'illustration, le serveur 120 peut être un serveur d'un opérateur de jeux et le serveur 125 peut être un serveur de vérification d'un tiers.

Des exemples d'étapes mises en oeuvre dans le dispositif 105, le terminal 110 et le serveur 120 illustrés sur la figure 1 sont décrits en référence aux figures 2 à 4.

La **figure 2** illustre un exemple d'étapes d'un procédé de création d'un certificat numérique pour aider ultérieurement un utilisateur à accéder à un service et/ou un fournisseur d'accès à donner accès à un service, selon des modes de réalisation particuliers de l'invention. Les étapes illustrées sur la figure 2 sont, par exemple, mises en oeuvre dans le dispositif 105 de la figure 1. Ces étapes peuvent être mises en oeuvre dans un module autonome ou dans un module d'une application particulière liée à au moins un service pouvant être demandé par l'utilisateur, par exemple une application de jeux telle que l'application connue sous le nom « Parions Sport Point de Vente » de la société La Française Des Jeux (La Française Des Jeux est une marque). Ce module de création d'un certificat numérique peut être exécuté à la demande de l'utilisateur ou de façon automatique, par exemple la première fois qu'il lance l'application comprenant ce module.

Comme illustré, une première étape (étape 200) a pour objet l'obtention d'une photographie ou d'une séquence vidéo d'au moins une partie d'un document d'identité d'un utilisateur, par exemple une photographie d'une carte d'identité. Cette photographie ou cette séquence vidéo peut être obtenue à l'aide d'un capteur vidéo du dispositif de l'utilisateur, par exemple son smartphone. Elle comprend une photographie de l'utilisateur et une caractéristique de l'utilisateur permettant de déterminer s'il peut accéder ou non à un service ou un produit, par exemple sa date de naissance. Elle comprend en outre, de préférence, des moyens de vérification, par exemple des données physiques et/ou des indices, permettant à un tiers d'effectuer des vérifications (par exemple des vérifications similaires à celles effectuées pour vérifier des billets de banque).

Dans une étape suivante ou précédente (étape 205), une photographie ou séquence vidéo de l'utilisateur est obtenue. Cette photographie ou cette séquence vidéo est de préférence obtenue à l'aide du capteur vidéo du dispositif de l'utilisateur. Elle consiste en une photographie ou une séquence vidéo actuelle de l'utilisateur.

Une vérification du document d'identité est ensuite ici effectuée (étape 210). Elle comprend par exemple la transmission de la photographie ou la séquence vidéo d'au moins une partie du document d'identité à un serveur d'un tiers de confiance qui va, par exemple, vérifier la présence de certains indices, comparer des informations figurant sur le document d'identité avec des résultats de calculs effectués à partir d'autres informations figurant sur le document d'identité, etc. En réponse à la transmission de la photographie ou de la séquence vidéo d'au moins une partie du document d'identité, le dispositif de l'utilisateur reçoit, par exemple, du tiers de confiance, une indication de validation ou de non-validation. Cette étape de vérification du document d'identité peut également comprendre une étape ayant pour objet de vérifier que l'utilisateur est bien le titulaire du document d'identité. Cette vérification peut être réalisée en comparant la photographie (ou un extrait de la séquence vidéo) actuelle de l'utilisateur à celle figurant sur le document d'identité. A ces fins, la photographie actuelle de l'utilisateur, la séquence vidéo ou un extrait de cette dernière peut être transmise au serveur du tiers de confiance. Ce processus de vérification d'un document d'identité peut utiliser une solution connue de l'homme de l'art, par exemple l'une des solutions connues sous les noms Yoti, Idcheck et Ubble (Yoti, Idcheck et Ubble sont des marques).

Si le document d'identité n'est pas validé (étape 215), il est ici mis fin à la procédure de création d'un certificat numérique et l'utilisateur en est, de préférence, averti, par exemple à l'aide d'un message affiché sur l'écran du dispositif (étape 220). Si, au contraire, le document d'identité est validé, une étape suivante, optionnelle, a pour objet de déterminer si l'utilisateur répond à des règles prédéterminées (étape 225), par exemple s'il n'est pas interdit de jeux. Si ces règles ne sont pas satisfaites, il est mis fin à la procédure de création d'un certificat numérique et, à nouveau, l'utilisateur en est, de préférence, averti, par exemple à l'aide d'un message affiché sur l'écran du dispositif (étape 220). Si, au contraire, ces règles sont satisfaites, les données devant figurées dans le certificat numérique sont obtenues et, de préférence, compressées et/ou cryptées (étape 230). Ces données sont, par exemple, la photographie actuelle (ou la séquence vidéo ou un extrait de celle-ci) de l'utilisateur et une ou plusieurs données figurant sur le document d'identité, par exemple la date de naissance de l'utilisateur. Selon des modes de réalisation particuliers, un algorithme de compression permettant une forte compression est utilisé pour permettre le codage du certificat sous forme d'un code de participation, par exemple un QR code ou un code-barres, ou d'une partie d'un tel code. L'algorithme de compression utilisé pour compresser une photographie d'un visage d'un utilisateur est par exemple basé sur celui décrit dans le document intitulé « Scalable facial image compression with deep feature reconstruction » de S. Wang et al., IEEE International Conference on Image Processing (ICIP), 2019.

Un certificat numérique est ensuite créé (étape 235). Il comprend les données obtenues, le cas échéant, compressées et/ou cryptées. Selon des modes de réalisation particuliers, il comprend en outre une signature, par exemple un résultat d'une fonction de hachage appliqué aux données obtenues (compressées et/ou cryptées ou non). Le certificat numérique peut également comprendre une indication relative à son origine, par exemple une indication relative au module utilisé pour le générer.

Le certificat numérique obtenu est avantageusement stocké localement, dans le dispositif de l'utilisateur, pour être utilisé lorsque ce dernier souhaite accéder à un service.

Suite à la création du certificat numérique, un message est, de préférence, adressé à l'utilisateur pour l'en informer (étape 220).

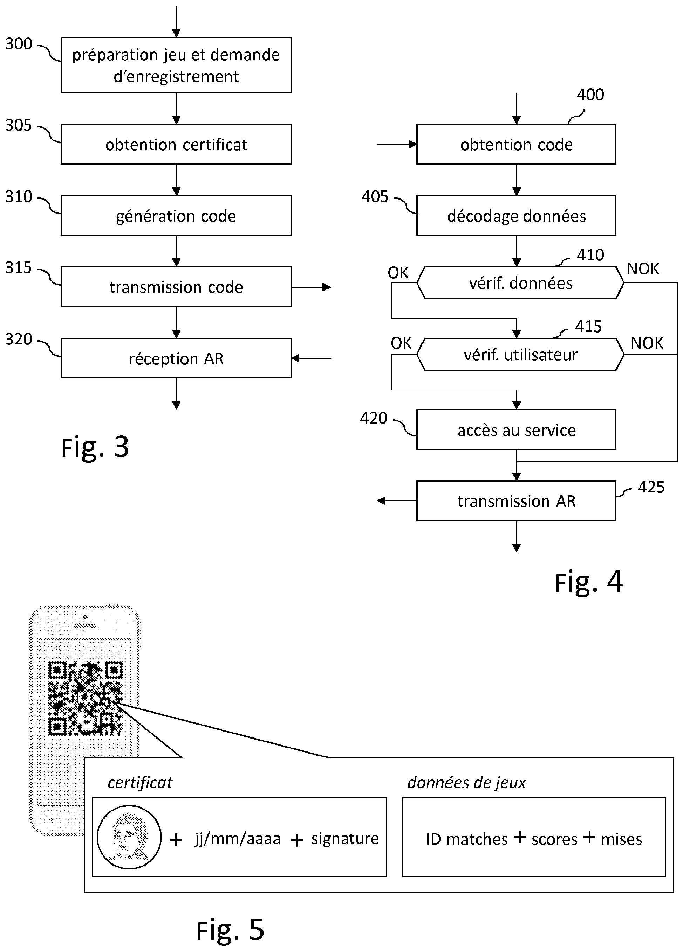

La **figure 3** illustre un exemple d'étapes d'un procédé d'utilisation d'un certificat numérique pour accéder à un jeu, par exemple un pari sportif, selon des modes de réalisation particuliers de l'invention, mises en oeuvre dans un dispositif d'un joueur.

Comme illustré, une première étape (étape 300) a pour objet de préparer l'accès à un service, ici préparer un enregistrement à un jeu. A titre d'illustration, cette étape peut être mise en oeuvre dans une application spécifique, par exemple l'application connue sous le nom « Parions sport » visée précédemment. La préparation à l'enregistrement au jeu comprend par exemple la sélection d'un ou plusieurs matches, de scores et de montants du ou des paris.

Bien que les étapes illustrées sur la figure 3 illustrent l'accès à un jeu, des étapes similaires peuvent être mises en oeuvre pour accéder à un autre service, accéder à un produit ou accéder à un lieu.

Dans une étape suivante, un certificat numérique tel que celui créé à l'issue des étapes illustrées sur la figure 2 est recherché et, le cas échéant, obtenu (étape 305). En l'absence de certificat numérique, la procédure se poursuit de façon usuelle (non représentée). Dans ce cas, les informations de jeu sont présentées de façon standard à un détaillant d'un point de vente, par exemple sous la forme d'un QR code, qui vérifie que le joueur est majeur et, dans l'affirmative, encaisse le montant du ou des paris, et enregistre ce ou ces paris.

Si, au contraire, un certificat numérique a été obtenu, un code de participation tel qu'un QR code ou un code-barres est généré (étape 310). Il comprend ici des données de jeux, par exemple des références (ou identifiants) de matches, des scores et des montants de paris, ainsi que des données du certificat numérique, par exemple une photographie du joueur, sa date de naissance et une signature du certificat numérique. Le format du code de participation peut être spécifique ou répondre à un standard. A titre d'illustration, il peut d'agir d'un QR conforme au standard ISO/CEI 18004:2015 permettant de coder jusqu'à 4,3 KO de données.

Le code de participation généré est alors transmis à un terminal d'un opérateur, par exemple un terminal d'un détaillant dans un point de vente (étape 315). Selon des modes de réalisation particuliers, la transmission de ce code de participation est réalisée en l'affichant sur le dispositif de l'utilisateur et en le lisant à l'aide d'un lecteur relié au terminal de l'opérateur. Selon d'autres modes de réalisation, ce code de participation peut être transmis par des moyens de communication, par exemple des moyens de communication en champs proche de type NFC (sigle de Near Field Communication en terminologie anglo-saxonne). En réponse à la transmission de ce code de participation et à son traitement par un système distant, un message de confirmation de participation au jeu ou de rejet est, de préférence, adressé au dispositif du joueur pour l'informer que sa participation au jeu a été enregistrée ou rejetée (étape 320). Un tel message est, par exemple, affiché sur l'écran du dispositif du joueur.

Selon d'autres modes de réalisation, non représentés, des données du certificat numérique ne sont pas transmises du dispositif de l'utilisateur à un terminal d'un opérateur, par exemple un détaillant d'un point de vente, mais l'utilisateur montre à l'opérateur, sur son propre dispositif, des données du certificat numérique (ou déterminées à partir du certificat numérique), l'opérateur pouvant alors valider simplement que l'utilisateur est apparemment celui qu'il prétend être (en comparant la photo affichée avec le visage de l'utilisateur), en vérifiant une information, par exemple son âge ou le fait qu'il soit majeur et, le cas échéant, en vérifiant l'origine du certificat numérique (et incidemment la validité du document d'identité).

La **figure 4** illustre un exemple d'étapes d'un procédé d'utilisation d'un certificat numérique pour donner accès à un jeu, par exemple un pari sportif, selon des modes de réalisation particuliers de l'invention, mises en oeuvre dans un terminal d'un opérateur, par exemple un terminal d'un détaillant dans un point de vente.

Comme illustré, une première étape a pour objet l'obtention d'un code de participation, par exemple un QR code ou un code-barres (étape 400). Comme décrit précédemment, un tel code de participation peut être obtenu par la lecture de ce code affiché sur un dispositif d'un joueur ou peut être reçu par des moyens de communication sans fil, par exemple de type NFC. Ce code de participation contient ici des données de jeu, par exemple des références à un ou plusieurs matches, à un ou plusieurs scores et à un ou plusieurs montants de paris. Il comprend en outre des données d'un certificat numérique, par exemple une photographie du joueur, une ou plusieurs caractéristiques du joueur, par exemple sa date de naissance et, de préférence, une signature ou une indication d'origine du certificat numérique.

Dans une étape suivante, les données sont extraites du code de participation (étape 405). Les données extraites sont alors, de préférence, vérifiées (étape 410). Une telle vérification peut notamment comprendre la vérification de la signature du certificat numérique, par exemple en comparant le résultat d'une fonction de hachage appliquée aux données du certificat numérique (à l'exception de la signature) avec la signature du certificat numérique reçue. Si les données extraites du code ne sont pas conformes aux données attendues, par exemple si le certificat numérique n'est pas authentifié, il est mis fin à la procédure d'enregistrement d'une participation à un jeu. Au contraire, si les données extraites du code sont conformes aux données attendues, une vérification du joueur est effectuée (étape 415).

Cette vérification peut comprendre l'affichage de la photographie contenue dans le code de participation obtenu et l'affichage d'une caractéristique de joueur, par exemple s'il est majeur ou non, cette caractéristique étant déterminée à partir de données contenues dans le code de participation reçu, par exemple en comparant une date de naissance, une date actuelle et l'âge de majorité. L'opérateur, par exemple le détaillant du point de vente concerné, peut alors comparer la photographie affichée sur son terminal avec le visage du joueur pour vérifier que le certificat numérique correspond bien à la personne qui souhaite jouer et vérifier que celle-ci a le droit de jouer, par exemple vérifier qu'elle est majeure.

Si le joueur n'a pas le droit de jouer, par exemple s'il est mineur, il est mis fin à la procédure d'enregistrement d'une participation à un jeu. Au contraire, s'il a le droit de jouer, sa participation est enregistrée (étape 420).

Un message d'enregistrement de la participation au jeu ou de rejet peut être transmis au dispositif du joueur à partir duquel le code a été obtenu (étape 425).

La **figure 5** illustre un exemple d'un dispositif d'un joueur voulant enregistrer une participation à un jeu, par exemple le dispositif 105 de la figure 1. Selon l'exemple illustré, l'écran du dispositif affiche un QR code dans lequel sont stockés un certificat numérique et des données de jeux. Le certificat numérique comprend ici une photographie du joueur qui a obtenu le certificat numérique, sa date de naissance et une signature du certificat numérique. Toujours à titre d'illustration, les données de jeux comprennent des références de matches, des scores et des montants pariés (mises).

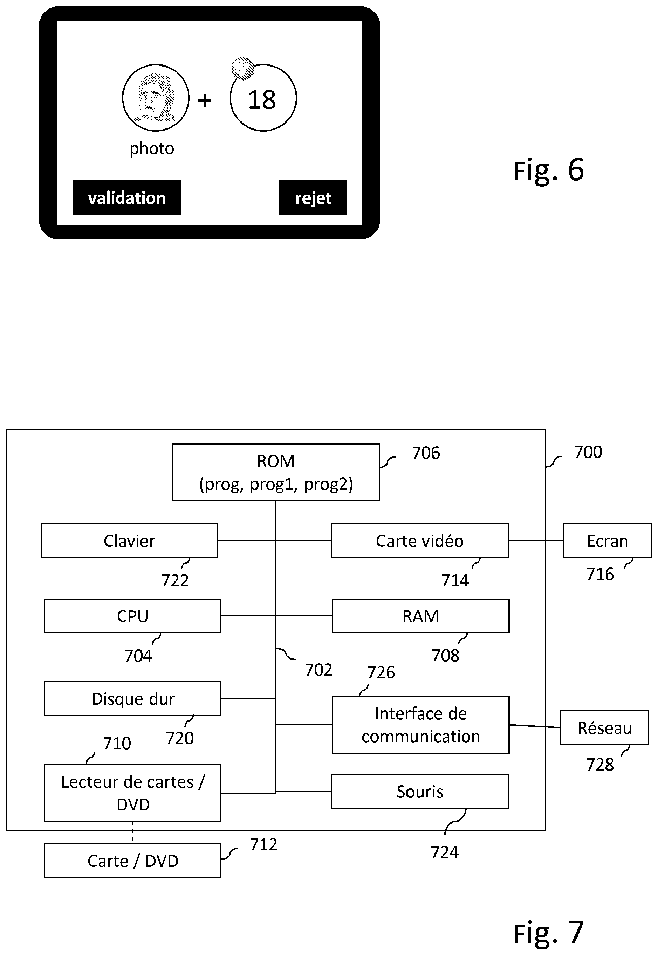

La **figure 6** illustre un exemple d'un écran d'un terminal d'un opérateur, par exemple d'un terminal d'un détaillant d'un point de vente, par exemple un écran du terminal 110, utilisé pour enregistrer une participation à un jeu. Selon l'exemple illustré, l'écran du terminal affiche des données reçues dans un code de participation transmis par un dispositif d'un joueur (ou déterminées à partir de telles données). Plus précisément, l'écran du terminal affiche ici une photographie d'un joueur ainsi qu'une indication de majorité déterminée à partir d'une date de naissance reçue. A partir de cet écran, un opérateur peut déterminer si le joueur est celui qu'il prétend être (i.e. si son visage correspond à la photographie contenue dans un certificat reçu) et si le joueur a le droit de jouer, par exemple s'il est majeur. Dans l'affirmative, l'opérateur peut valider l'enregistrement au jeu. Dans le cas contraire, il peut le rejeter.

La **figure 7** illustre un exemple de dispositif pouvant être utilisé pour mettre en oeuvre, au moins partiellement, des modes de réalisation de l'invention, notamment des étapes décrites en référence aux figures 2 à 4.

Le dispositif 700 est par exemple un serveur, un ordinateur, un terminal ou un dispositif personnel tel qu'un smartphone ou une tablette.

Le dispositif 700 comporte de préférence un bus de communication 702 auquel sont reliées :
- une unité centrale de traitement ou microprocesseur 704 (CPU, sigle de Central Processing Unit en terminologie anglo-saxonne) ;
- une mémoire morte 706 (ROM, acronyme de Read Only Memory en terminologie anglo-saxonne) pouvant comporter un système d'exploitation et des programmes tels que "Prog" ;
- une mémoire vive ou mémoire cache 708 (RAM, acronyme de Random Access Memory en terminologie anglo-saxonne) comportant des registres adaptés à enregistrer des variables et paramètres créés et modifiés au cours de l'exécution des programmes précités ; et
- une interface de communication 726 reliée à un réseau de communication distribué 728, par exemple un réseau de communication sans fil et/ou un réseau de communication local, l'interface étant apte à transmettre et à recevoir des données, notamment vers et depuis un dispositif d'un utilisateur.

Optionnellement, le dispositif 700 peut également disposer des éléments suivants :
- un disque dur 720 pouvant comporter les programmes "Prog" précités et des données traitées ou à traiter selon l'invention ;
- un clavier 722 et une souris 724 ou tout autre dispositif de pointage comme un crayon optique, un écran tactile ou une télécommande permettant à l'utilisateur d'interagir avec les programmes selon l'invention ;
- un lecteur 710 de support amovible de stockage 712 tel qu'une carte mémoire ou un disque, par exemple un disque DVD ; et
- une carte graphique 714 reliée à un écran 716.

Le bus de communication permet la communication et l'interopérabilité entre les différents éléments inclus dans le dispositif 700 ou reliés à lui. La représentation du bus n'est pas limitative et, notamment, l'unité centrale est susceptible de communiquer des instructions à tout élément du dispositif 700 directement ou par l'intermédiaire d'un autre élément du dispositif 700.

Le code exécutable de chaque programme permettant à l'appareil programmable de mettre en oeuvre les processus selon l'invention peut être stocké, par exemple, dans le disque dur 720 ou en mémoire morte 706.

Selon une variante, le code exécutable des programmes pourra être reçu par l'intermédiaire du réseau de communication 728, via l'interface 726, pour être stocké de façon identique à celle décrite précédemment.

De manière plus générale, le ou les programmes pourront être chargés dans un des moyens de stockage du dispositif 700 avant d'être exécutés.

L'unité centrale 704 va commander et diriger l'exécution des instructions ou portions de code logiciel du ou des programmes selon l'invention, instructions qui sont stockées dans le disque dur 720 ou dans la mémoire morte 706 ou bien dans les autres éléments de stockage précités. Lors de la mise sous tension, le ou les programmes qui sont stockés dans une mémoire non volatile, par exemple le disque dur 720 ou la mémoire morte 706, sont transférés dans la mémoire vive 708 qui contient alors le code exécutable du ou des programmes selon l'invention, ainsi que des registres pour mémoriser les variables et paramètres nécessaires à la mise en oeuvre de l'invention.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et l'équipement pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé pour ordinateur d'aide à l'accès à une prestation à l'aide d'un dispositif pourvu de moyens d'acquisition de données et de moyens de communication, ladite prestation n'étant accessible que sous au moins une condition, le procédé comprenant,
- obtention, par ledit dispositif, de données d'identification d'un utilisateur, à partir desdits moyens d'acquisition dudit dispositif et d'un document d'identification, lesdites données d'identification comprenant au moins une photographie dudit utilisateur et une caractéristique dudit utilisateur,
- transmission, par ledit dispositif, desdites données d'identification obtenues à un système de validation,
- en réponse à ladite transmission desdites données d'identification, réception, par ledit dispositif, d'une donnée de validation confirmant la validité dudit document d'identification,
- en réponse à ladite réception d'une donnée de validation, création et mémorisation, par ledit dispositif, d'un certificat numérique signé, ledit certificat numérique comprenant au moins une photographie dudit utilisateur et ladite caractéristique obtenue,
ledit certificat numérique étant utilisé pour obtenir ladite caractéristique et ladite photographie, ledit certificat et des données de ladite prestation étant codés par le dispositif dans un code d'accès, ladite photographie pouvant être comparée avec un visage réel pour valider ladite caractéristique, ladite prestation étant accédée en réponse à la validation de ladite caractéristique.

2. Procédé selon la revendication 1, comprenant en outre l'obtention, par ledit dispositif, d'une photographie actuelle dudit utilisateur, ladite photographie actuelle étant obtenue à partir desdits moyens d'acquisition dudit dispositif, ladite photographie dudit certificat numérique étant ladite photographie actuelle.

3. Procédé selon la revendication 2, comprenant en outre une transmission, par ledit dispositif, de ladite photographie actuelle audit système de validation pour vérifier que ledit utilisateur est le titulaire dudit document d'identité.

4. Procédé selon l'une quelconque des revendications 1 à 3, comprenant en outre une étape de compression et/ou de codage, par ledit dispositif, de ladite photographie et de ladite caractéristique dudit certificat numérique.

5. Procédé selon l'une quelconque des revendications 1 à 4 comprenant en outre une étape de calcul, par ledit dispositif, d'une signature basée sur ladite photographie et/ou ladite caractéristique dudit certificat numérique, ladite signature étant ajoutée audit certificat numérique.

6. Procédé selon l'une quelconque des revendications 1 à 5 comprenant en outre
- obtention, par ledit dispositif, de données relatives à ladite prestation,
- codage, par ledit dispositif, desdites données obtenues relatives à ladite prestation et de données dudit certificat numérique dans ledit code d'accès à ladite prestation, et
- transmission, par ledit dispositif, dudit code d'accès à un terminal d'un opérateur, ledit terminal étant configuré pour décoder des données dudit code d'accès et afficher au moins ladite photographie dudit certificat numérique et une information obtenue à partir de ladite caractéristique dudit certificat numérique.

7. Procédé selon la revendication 6, dans lequel la transmission dudit code d'accès comprend l'affichage dudit code d'accès sur ledit dispositif.

8. Procédé selon la revendication 6 ou la revendication 7 comprenant en outre
- réception, par ledit terminal, dudit code d'accès,
- obtention, dans ledit terminal, de ladite photographie dudit certificat numérique codé dans ledit code d'accès,
- affichage, par ledit terminal, de ladite photographie obtenue dudit certificat numérique codé dans ledit code d'accès et de ladite information obtenue à partir de ladite caractéristique dudit certificat numérique,
- en réponse à une validation, sur ledit terminal, d'un opérateur suite audit affichage de ladite photographie obtenue dudit certificat numérique codé dans ledit code d'accès et de ladite information obtenue à partir de ladite caractéristique dudit certificat numérique, fourniture d'un accès à ladite prestation audit utilisateur.

9. Programme d'ordinateur comprenant des instructions pour la mise en oeuvre de chacune des étapes du procédé selon l'une des revendications 1 à 7, lorsque ce programme est exécuté par un processeur.

10. Dispositif comprenant une unité de traitement configurée pour exécuter chacune des étapes du procédé selon l'une des revendications 1 à 7.

## Patentansprüche

1. Verfahren für einen Computer zur Unterstützung des Zugriffs auf eine Dienstleistung mithilfe einer Vorrichtung, die mit Datenerfassungsmitteln und Kommunikationsmitteln versehen ist, wobei die Dienstleistung nur unter mindestens einer Bedingung zugänglich ist, wobei das Verfahren umfasst:
- Erhalten von Identifikationsdaten eines Benutzers durch die Vorrichtung anhand der Erfassungsmittel der Vorrichtung und eines Identifikationsdokuments, wobei die Identifikationsdaten mindestens ein Foto des Benutzers und ein Merkmal des Benutzers umfassen,
- Übermittlung der erhaltenen Identifikationsdaten durch die Vorrichtung an ein Validierungssystem,
- als Reaktion auf die Übermittlung der Identifikationsdaten, Empfang einer Validierungsinformation durch die Vorrichtung, die die Gültigkeit des Identifikationsdokuments bestätigt,
- als Reaktion auf den Empfang einer Validierungsinformation, Erstellung und Speicherung eines signierten digitalen Zertifikats durch die genannte Vorrichtung,
wobei das digitale Zertifikat mindestens umfasst:
ein Foto des Benutzers und das erhaltene Merkmal,
wobei das digitale Zertifikat zum Erhalten des Merkmals und des Fotos verwendet wird und das Zertifikat und Daten der Dienstleistung von der Vorrichtung in einen Zugangscode codiert sind,
wobei das Foto mit einem echten Gesicht verglichen werden kann, um das Merkmal zu validieren, wobei auf die Dienstleistung als Reaktion auf die Validierung des Merkmals zugegriffen wird.

2. Verfahren nach Anspruch 1, das ferner das Erhalten eines aktuellen Fotos des Benutzers durch die Vorrichtung umfasst, wobei das aktuelle Foto anhand der Erfassungsmittel der Vorrichtung erhalten wird und das Foto des digitalen Zertifikats das aktuelle Foto ist.

3. Verfahren nach Anspruch 2, das ferner eine Übermittlung des aktuellen Fotos an das Validierungssystem durch die Vorrichtung umfasst, um zu überprüfen, dass der Benutzer der Inhaber des Ausweisdokuments ist.

4. Verfahren nach einem der Ansprüche 1 bis 3, das ferner einen Schritt des Komprimierens und/oder des Codierens des Fotos und des Merkmals des digitalen Zertifikats durch die Vorrichtung umfasst.

5. Verfahren nach einem der Ansprüche 1 bis 4, das ferner einen Schritt des Berechnens einer Signatur auf Grundlage des Fotos und/oder des Merkmals des digitalen Zertifikats durch die Vorrichtung umfasst, wobei die Signatur dem digitalen Zertifikat hinzugefügt wird.

6. Verfahren nach einem der Ansprüche 1 bis 5, das ferner umfasst
- Erhalten von Daten bezüglich der Dienstleistung durch die Vorrichtung,
- Codieren der erhaltenen Daten bezüglich der Dienstleistung und der Daten des digitalen Zertifikats durch die Vorrichtung in den Zugangscode für die Dienstleistung, und
- Übermittlung des Zugangscodes durch die Vorrichtung an ein Endgerät eines Betreibers, wobei das Endgerät konfiguriert ist, um Daten des Zugangscodes zu decodieren und zumindest das Foto des digitalen Zertifikats und eine aus dem Merkmal des digitalen Zertifikats erhaltene Information anzuzeigen.

7. Verfahren nach Anspruch 6, wobei die Übermittlung des Zugangscodes die Anzeige des Zugangscodes auf der Vorrichtung umfasst.

8. Verfahren nach Anspruch 6 oder Anspruch 7, das ferner umfasst
- Empfangen des Zugangscodes durch das Endgerät,
- Erhalten, in dem Endgerät, des Fotos aus dem digitalen Zertifikat, das in dem Zugangscode codiert ist,
- Anzeigen des aus dem digitalen Zertifikat, das in dem Zugangscode codiert ist, erhaltenen Fotos und der aus dem Merkmal des digitalen Zertifikats erhaltenen Information durch das Endgerät,
- als Reaktion auf eine Validierung, auf dem Endgerät, eines Betreibers nach der Anzeige des Fotos, das aus dem in dem Zugangscode codierten digitalen Zertifikat erhalten wird, und der aus dem Merkmal des digitalen Zertifikats erhaltenen Information, Gewährung eines Zugangs zu der Dienstleistung für den Nutzer.

9. Computerprogramm, das Anweisungen zur Durchführung jedes der Schritte des Verfahrens nach einem der Ansprüche 1 bis 7 umfasst, wenn das Programm von einem Prozessor ausgeführt wird.

10. Vorrichtung, die eine Verarbeitungseinheit umfasst, die konfiguriert ist, um jeden der Schritte des Verfahrens nach einem der Ansprüche 1 bis 7 auszuführen.

## Claims

1. Method for a computer aiding access to a service by a device provided with data-acquisition means and communication means, said service being accessible only subject to at least one condition, the method comprising:
obtaining, by said device, identification data of a user, from said acquisition means of said device and from an identification document, said identification data comprising at least one photograph of said user and a characteristic of said user,
transmitting, by said device, said identification data obtained to a validation system,
in response to said identification data transmitted, receiving, by said device, validation data confirming the validity of said identification document,
in response to said validation data received, creating and storing, by said device, a signed digital certificate, said digital certificate comprising at least one photograph of said user and said characteristic obtained,
said digital certificate being used to obtain said characteristic and said at least one photograph from said digital certificate, said certificate and service data being encoded by the device into an access code,
said at least one photograph being able to be compared to a real face to validate said characteristic, said service being accessed in response to the validation of said characteristic.

2. The method according to claim 1, further comprising obtaining, by said device, a current photograph of said user, said current photograph being obtained from said acquisition means of said device, said at least one photograph of said digital certificate being said current photograph.

3. The method according to claim 2, further comprising a transmission, by said device, of said current photograph to said validation system to verify that said user is an owner of said identity document.

4. The method according to any of claims 1 to 3, further comprising at least one compressing and/or encoding step, by said device, of said at least one photograph and of said characteristic of said digital certificate.

5. The method according to any claims 1 to 4, further comprising a calculating step, by said device, of a signature based on at least one of said at least one photograph and/or said characteristic of said digital certificate by said device, said signature being added to said digital certificate.

6. The method according to any of claims 1 to 5, further comprising:
obtaining, by said device, data relating to said service,
encoding, by said device, said data obtained relating to said service and data of said digital certificate in said access code to provide access to said service, and
transmitting, by said device, said access code to a terminal of an operator, said terminal being configured to decode data of said access code and to display at least said photograph of said digital certificate and information obtained from said characteristic of said digital certificate.

7. The method according to claim 6, further comprising displaying said access code on said device.

8. The method according to claim 6 or claim 7, further comprising:
receiving, by said terminal, said access code,
obtaining, in said terminal, said at least one photograph of said digital certificate encoded in said access code,
displaying, by said terminal, said at least one photograph of said digital certificate encoded in said access code and said information obtained from said characteristic of said digital certificate, and
in response to a validation, on said terminal, of an operator following said display of said at least one photograph of said digital certificate encoded in said access code and said information obtained from said characteristic of said digital certificate, providing access to said service to said user.

9. A computer program comprising instructions for implementing each of the steps of the method according to any of claims 1 to 7, when the program is executed by a processor.

10. A device comprising a processing unit configured to execute each of the steps of the method according to any of claims 1 to 7.
